# FASCICULE DE BREVET EUROPEEN

(11) **EP 3 036 463 B1**
(45) Date de publication et mention de la délivrance du brevet: **02.01.2019**
(21) Numéro de dépôt: 14752898.8
(22) Date de dépôt: 20.08.2014
(51) Int. Cl.: F16J 15/32

(54) **JOINT D'ÉTANCHÉITÉ À BOURRELET ET DISPOSITIF DE RACCORDEMENT COMPRENANT UN TEL JOINT**
WULSTDICHTUNG UND VERBINDUNGSVORRICHTUNG MIT SOLCH EINER DICHTUNG
BEAD SEAL AND CONNECTION DEVICE COMPRISING SUCH A SEAL

(30) Priorité: 21.08.2013 FR 1358109
(43) Date de publication de la demande: 29.06.2016
(73) Titulaire: Parker Hannifin Manufacturing France SAS, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2014/067777
(87) Numéro de publication internationale: WO 2015/024984

(56) Documents cités:
- EP-A1- 1 967 773
- US-A1- 2005 156 387
- US-A1- 2012 181 756

## Description

### DOMAINE DE L'INVENTION

La présente invention concerne le domaine de l'étanchéité des circuits de transport de fluide et plus particulièrement l'étanchéité des raccords pour tubes, notamment les raccords à connexion instantanée.

### ETAT DE LA TECHNIQUE

On connaît des dispositifs de raccordement du type à connexion instantanée pour relier l'un à l'autre deux éléments d'un circuit de transport de fluide. Un tel élément est par exemple une pompe, un distributeur, un actionneur, un réservoir, un régulateur de débit ou de pression ou encore un tube.

Un dispositif de raccordement comprend généralement un corps dans lequel est réalisé un alésage qui est fluidiquement lié à un des éléments de circuits et qui reçoit des moyens pour la retenue étanche d'un tube à raccorder audit élément. Les moyens de retenue comportent par exemple une rondelle dentée élastiquement déformable ainsi qu'un joint d'étanchéité annulaire destiné à assurer un raccordement étanche de l'alésage et du tube à raccorder. Classiquement, ce joint est reçu dans une gorge annulaire ménagée dans l'alésage ou est simplement mis en appui par une de ses faces latérales contre une butée de l'alésage.

Les joints annulaires utilisés pour de tels raccords ont fréquemment une section circulaire et sont appelés « joints toriques ». Ces joints sont obtenus par moulage au moyen d'un moule à deux empreintes formant chacune un demi-tore du joint. Le joint une fois moulé présente à l'endroit de la jonction des empreintes (également appelée plan de jonction) une bavure annulaire et éventuellement un décalage des demi-tores l'un par rapport à l'autre. Bien que largement utilisés, ils ces joints présentent l'inconvénient de tourner partiellement sur eux-mêmes lors de l'introduction du tube provoquant un vrillage du plan de jonction le long duquel va se former une fuite.

Pour palier à cet inconvénient, il a été envisagé de modifier la section du joint annulaire (voir par exemple EP-A-1967773). Il a ainsi été conçu des joints ayant des faces latérales plates s'étendant radialement, une circonférence extérieure formée par une surface cylindrique et une circonférence intérieure ayant un profil bombé. La circonférence intérieure est formée d'un bourrelet partiellement circulaire relié aux faces latérales du joint par des surfaces tronconiques tangentes au bourrelet circulaire. Ces joints assurent une bonne étanchéité et permettent une compression progressive du joint par le tube lors de son introduction. L'effort à exercer pour comprimer le joint est cependant relativement important. Pour faciliter l'introduction du tube dans le joint, il est connu de graisser le joint en usine lors de l'assemblage des constituants du raccord. Cependant, des sous-dosages ou surdosages de graisse peuvent conduire à un graissage insuffisant du joint, rendant difficile l'insertion du tube dans le joint, ou entraîner une pollution du circuit. Certaines applications spécifiques (médicales, agro-alimentaires, chimiques...) exigent des graisses spécifiques, ce qui complique la gestion des références pour les fabricants et impose de forts couteux contrôles de la conformité des opérations de graissage.

### OBJET DE L'INVENTION

Un but de l'invention est de proposer un joint permettant d'obvier au moins en partie aux inconvénients précités.

### RESUME DE L'INVENTION

A cet effet, on prévoit, selon l'invention, un joint d'étanchéité annulaire pour dispositif de raccordement fluidique. Le joint comprend des faces latérales, une circonférence extérieure délimitée par un bourrelet externe de section transversale partiellement circulaire, et une circonférence intérieure délimitée par un bourrelet interne de section transversale partiellement circulaire et qui est relié à au moins une des faces latérales par une surface tronconique non tangente au bourrelet interne.

Ainsi, la surface tronconique non tangente permet une compression progressive du joint et le franchissement du bourrelet interne par le tube est facilité par le fait que le volume de matière élastique s'opposant à l'introduction du tube et devant être comprimé est réduit.

Selon un mode de réalisation particulier, le bourrelet externe est relié à chacune des faces latérales par une surface cylindrique de génératrice parallèle à un axe central du joint.

Cette disposition permet d'assurer l'étanchéité entre le joint et l'alésage dans lequel il est monté par la compression du seul bourrelet externe et contribue ainsi à réduire le volume de matière élastique s'opposant à l'introduction du tube et devant être comprimé.

Avantageusement, ladite surface tronconique a un demi-angle au sommet compris entre cinq et vingt degrés environ et, préférentiellement, sensiblement égal à dix degrés.

De préférence, le joint d'étanchéité a une section transversale symétrique par rapport à un plan radial médian du joint.

Un joint dont la section est symétrique par rapport à un axe radial permet de faciliter les opérations de fabrication d'un dispositif de raccordement incorporant celui-ci en évitant d'avoir à orienter le joint lors de son montage.

L'invention concerne également un dispositif de raccordement d'un tube cylindrique, comprenant un alésage, un tel joint d'étanchéité annulaire et une butée contre laquelle une des faces latérales du joint annulaire d'étanchéité vient en appui.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux figures annexées parmi lesquelles :
- la figure 1 est une demi-vue en coupe axiale d'un dispositif selon l'invention ;
- la figure 2 est une demi-vue en coupe axiale d'un joint selon le mode de réalisation de la figure 1;
- la figure 3 est une représentation schématique du dispositif de la figure 1 lors de l'introduction d'un tube ;
- la figure 4 est une vue analogue à celle de la figure 3, le tube étant complètement introduit dans le dispositif.

### DESCRIPTION DETAILLEE DE L'INVENTION

Le dispositif selon l'invention est ici un dispositif de raccordement à connexion instantanée ayant une section agencée pour être en liaison fluidique avec un équipement d'un circuit de transport de fluide et une section agencée pour recevoir un tube 5 de ce même circuit de transport de fluide et raccorder le tube 5 et l'équipement l'un à l'autre.

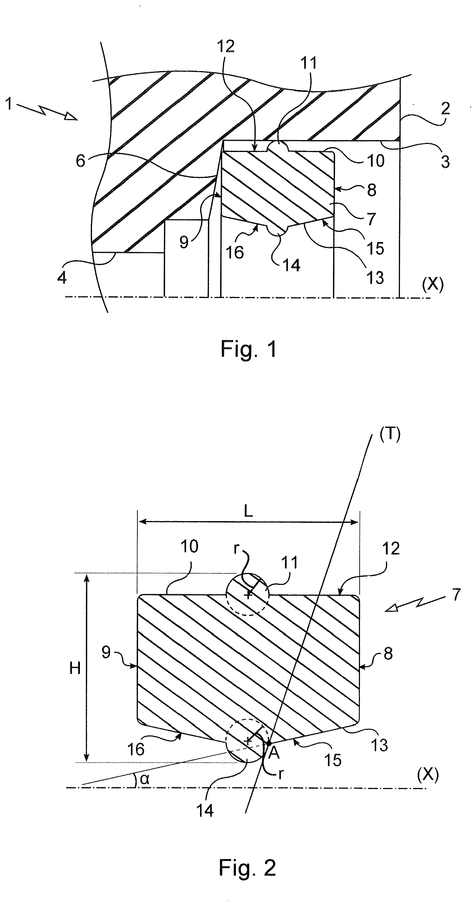

En référence aux figures 1 et 2, le dispositif de raccordement, généralement désigné 1, comprend un corps cylindrique 2, d'axe longitudinal X, dans lequel est réalisé un alésage 3 en communication fluidique avec un deuxième alésage 4 relié à l'équipement sur lequel le tube 5, ici en matière plastique, vient se raccorder.

L'alésage 3 présente un épaulement annulaire continu 6 contre lequel vient s'appuyer un joint d'étanchéité 7. Les moyens de retenue du tube 5 ne sont pas représentés et peuvent prendre différentes formes connues de l'homme du métier.

Le joint 7 est maintenant décrit en détail.

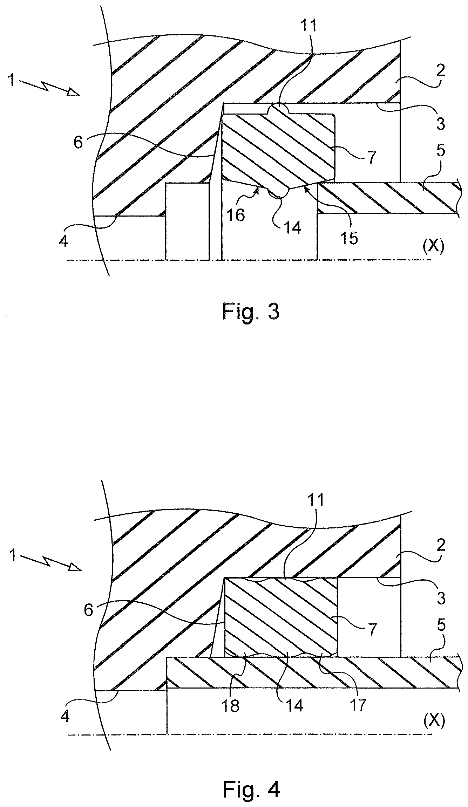

De forme annulaire d'axe central X, le joint 7 comprend deux faces latérales parallèles 8 et 9 sensiblement radiales (la face latérale 8 étant en appui contre l'épaulement 6), une circonférence extérieure 10 et une circonférence intérieure 13. La circonférence extérieure 10 est délimitée par un bourrelet externe 11 de section transversale partiellement circulaire relié à chacune des faces latérales 8 et 9 par une surface cylindrique 12 de génératrice parallèle à l'axe central X. La circonférence intérieure 13 est délimitée par un bourrelet interne 14 qui a une section transversale partiellement circulaire et qui est relié à la face latérale 8 par une surface tronconique 15 non tangente au bourrelet interne 14. Le bourrelet interne 14 est également relié à la face latérale 9 par une surface tronconique 16 non tangente au bourrelet interne 14. Au sens de la présente description et en référence à la figure 3, la surface tronconique 15, 16 est considérée, selon une acception simplifiée, non tangente au bourrelet interne 14 lorsqu'elle est sécante au bourrelet interne 14. En d'autres termes, la surface tronconique 15, 16 est considérée non tangente au bourrelet interne 14 lorsqu'une droite appartenant à cette surface tronconique 15, 16 et à un plan axial contenant l'axe X réalise un angle non nul avec la tangente T à la portion circulaire du bourrelet interne 14 passant par le point d'intersection A de la surface du bourrelet interne 14 et de la surface tronconique 16 dans le plan axial considéré. Les surfaces tronconiques 15, 16 sont coaxiales à l'axe X.

Les surfaces tronconiques 15 et 16 reliant le bourrelet interne 14 aux faces latérales 8 et 9 du joint 7 ont un demi-angle au sommet α qui est ici sensiblement égal à 10 degrés par rapport à une direction axiale. On remarquera, sur les figures 1 à 3, que les bourrelets interne 14 et externe 11 présentent des sections ayant des aires sensiblement égales.

Le dispositif va maintenant être décrit en fonctionnement en référence aux figures 3 et 4. Lors de l'introduction du tube en matière plastique 5 dans le dispositif de raccordement à connexion instantanée 1, l'extrémité du tube 5 vient au contact de la surface tronconique 15 et exerce alors un effort de compression du joint 7 selon une direction radiale. Ainsi, au fur et à mesure de son introduction dans le joint 7, le tube 5 va tout d'abord comprimer le bourrelet externe 11 contre la face intérieure de l'alésage 3, assurant l'étanchéité du joint 7 avec l'alésage 3 au niveau de la circonférence externe 10, puis l'extrémité du tube 5 va franchir le bourrelet interne 14 en comprimant celui-ci, étape représentant le moment où l'effort d'introduction est le plus important. La compression du bourrelet 14 par le tube 5 permet de réaliser une liaison étanche entre le joint 7 et le tube 5 au niveau de la circonférence interne du joint 7. Une fois le tube 5 complètement introduit dans le raccord 1, le joint 7 adopte un état déformé représenté à la figure 5. Dans cet état, la déformation du bourrelet interne 14 a provoqué une déformation des surfaces tronconiques 15 et 16 qui crée deux zones annulaires de contention 17 et 18 exerçant un effort périphérique radial de contention sur le tube 5. Ces efforts périphériques radiaux exercés sur deux portions de largeur significative du tube 5 luttent contre l'ovalisation de celui-ci, ce qui contribue à la performance en étanchéité du joint 7. La déformation du tube 5 sous l'effet de mouvements perpendiculaires à l'axe X est également réduite ce qui représente un intérêt significatif dans les systèmes mobiles dans lesquels le tube 5 est en mouvement comme par exemple des bras de manutention.

L'étanchéité procurée par le joint 7 se révèle particulièrement efficace lorsqu'au moins un des bourrelets 14 ou 15 a une section circulaire dont le rayon r est compris entre H/4 et H/8, où H représente l'épaisseur du joint 7 selon une direction radiale du joint 7. L'étanchéité optimale est obtenue pour une valeur du rayon r sensiblement égal à 1/6 de l'épaisseur H.

De manière générale et particulièrement dans des applications de remplacement d'un joint existant pour lesquelles l'épaisseur L du joint selon une direction axiale est déterminée, le rayon r est idéalement tel que 6r<L<10r et préférentiellement sensiblement égal à 1/8 de l'épaisseur L.

La section du joint 7 est ici symétrique par rapport à un plan radial médian du joint 7 (ce plan contenant les axes radiaux du joint 7). Ceci permet d'éviter d'avoir à se préoccuper d'une orientation du joint 7 lors du montage et simplifie ainsi la mise en place du joint 7 dans le dispositif 1 de manière automatisée.

Bien entendu, l'invention n'est pas limitée au mode de réalisation décrit mais englobe toute variante entrant dans le champ de l'invention telle que définie par les revendications.

En particulier,
- bien qu'ici le tube qui est connecté au dispositif de raccordement à connexion instantanée selon l'invention soit en matière plastique, l'invention s'applique également à des tubes réalisés dans d'autres types de matières tels que par exemple l'acier, l'inox, le cuivre, les composites...
- bien qu'ici les deux faces latérales du joint soient parallèles et sensiblement radiales, l'invention s'applique également à un joint comprenant des faces latérales non parallèles et/ou s'étendant selon des plans formant un angle non nul par rapport à un plan radial. Enfin, les faces latérales peuvent ne pas être planes et être tronconiques ou comporter un relief comme par exemple une saillie annulaire destinée à coopérer avec une gorge ou des tétons permettant une immobilisation en rotation du joint ;
- bien qu'ici les surfaces tronconiques 15, 16 reliant le bourrelet interne 14 aux faces latérales 8, 9 du joint 7 aient un demi-angle au sommet sensiblement égal à 10 degrés, l'invention s'applique également à des valeurs différentes du demi-angle au sommet comme par exemple un angle compris entre cinq et vingt degrés ;
- bien qu'ici, le bourrelet interne 14 et le bourrelet externe 11 présentent des sections transversales d'aires sensiblement égales, l'invention s'applique également à un joint possédant des bourrelets présentant des sections transversales d'aires différentes, comme par exemple un bourrelet externe 11 présentant une section transversale ayant une aire supérieure à celle de la section transversale du bourrelet interne 14 ;
- bien qu'ici, les deux surfaces tronconiques 15, 16 soient conformées pour exercer, après introduction du tube, un effort périphérique radial de contention sur le tube, l'invention s'applique également à un dispositif de raccordement à connexion instantanée dont seulement une des surfaces tronconiques 15, 16 est conformée pour exercer, après introduction du tube, un effort périphérique radial de contention sur le tube ;
- bien qu'ici la section du joint soit symétrique par rapport à un axe radial, l'invention s'applique également à un joint dissymétrique par rapport à un axe radial, tel que par exemple un joint ne comportant qu'une seule surface tronconique 15, 16 ;
- bien qu'ici le joint 7 soit monté dans un dispositif de raccordement du type à connexion instantanée, l'invention s'applique également à un joint monté dans d'autre type de dispositif de raccordement comme par exemple des dispositifs de connexion par vissage, brasage ou collage.

## Revendications

1. Joint d'étanchéité annulaire (7) pour dispositif de raccordement fluidique (1), le joint (7) comprenant des faces latérales (8, 9), une circonférence extérieure (10) délimitée par un bourrelet externe (11) et une circonférence intérieure (13) délimitée par un bourrelet interne (14), **caractérisé en ce que** ledit bourrelet interne (14) est relié à au moins une des faces latérales (8,9) par une surface tronconique (15, 16) non tangente au bourrelet interne (14), dans lequel lesdits bourrelets (11, 14) ont une section transversale partiellement circulaire.

2. Joint d'étanchéité annulaire (7) selon la revendication 1, dans lequel le bourrelet externe (11) est relié à chacune des faces latérales (8, 9) par une surface cylindrique (12) de génératrice parallèle à un axe central (X) du joint.

3. Joint d'étanchéité annulaire (7) selon la revendication 1, dans lequel ladite surface tronconique (15, 16) a un demi-angle au sommet (α) compris entre cinq et vingt degrés environ.

4. Joint d'étanchéité annulaire (7) selon la revendication 3, dans lequel le demi-angle au sommet (α) est sensiblement égal à dix degrés.

5. Joint d'étanchéité annulaire (7) selon l'une des revendications précédentes, dans lequel les bourrelets externe (11) et interne (14) présentent des sections transversales ayant des aires sensiblement égales.

6. Joint d'étanchéité annulaire (7) selon la revendication 1, dans lequel ledit bourrelet (11, 14) a un rayon r tel que H/4<r<H/8, où H représente l'épaisseur du joint selon une direction radiale du joint.

7. Joint d'étanchéité annulaire (7) selon la revendication 6, dans lequel le rayon r est sensiblement égal à 1/6 de l'épaisseur H.

8. Joint d'étanchéité annulaire (7) selon la revendication 1, dans lequel ledit bourrelet (11, 14) a un rayon r tel que 6r<L<10r, où L représente l'épaisseur du joint (7) selon une direction axiale (X) du joint (7).

9. Joint d'étanchéité annulaire (7) selon la revendication 8, dans lequel le rayon r est sensiblement égal à 1/8 de l'épaisseur L.

10. Joint d'étanchéité annulaire (7) selon l'une quelconque des revendications précédentes, dans lequel les faces latérales (8, 9) sont sensiblement radiales.

11. Joint d'étanchéité annulaire (7) selon l'une des revendications précédentes, ayant une section transversale symétrique par rapport à un plan radial médian du joint.

12. Dispositif de raccordement (1) d'un tube cylindrique (5), comprenant un joint d'étanchéité annulaire (7) conforme à l'une quelconques des revendications précédentes, le dispositif comprenant un alésage (3) et une butée (6) contre laquelle une des faces latérales (8, 9) du joint d'étanchéité annulaire (7) vient en appui.

13. Dispositif de raccordement (1) selon la revendication 12, dans lequel le tube (5) est un tube en matière plastique.

14. Dispositif de raccordement (1) selon la revendication 12, dans lequel la surface tronconique (15, 16) de la circonférence intérieure (13) est conformée pour exercer, après introduction du tube (5), un effort périphérique radial de contention sur le tube (5).

## Patentansprüche

1. Ringförmige Dichtung (7) für eine Fluidverbindungsvorrichtung (1), wobei die Dichtung (7) Seitenflächen (8, 9), einen äußeren Umfang (10), der von einem äußeren Wulst (11) begrenzt ist, sowie einen inneren Umfang (13) umfasst, der von einem inneren Wulst (14) begrenzt ist, **dadurch gekennzeichnet, dass** der genannte innere Wulst (14) mit mindestens einer der Seitenflächen (8, 9) über eine kegelstumpfförmige Fläche (15, 16) verbunden ist, die nicht tangential zum inneren Wulst (14) ist, wobei die genannten Wülste (11, 14) einen teilweise kreisförmigen Querschnitt haben.

2. Ringförmige Dichtung (7) nach Anspruch 1, bei der der äußere Wulst (11) mit jeder der Seitenflächen (8, 9) über eine zylindrische Mantelfläche (12) verbunden ist, die parallel zu einer Mittelachse (X) der Dichtung ist.

3. Ringförmige Dichtung (7) nach Anspruch 1, bei der die genannte kegelstumpfförmige Fläche (15, 16) einen Halbwinkel (α) an der Spitze hat, der ungefähr zwischen fünf und zwanzig Grad beträgt.

4. Ringförmige Dichtung (7) nach Anspruch 3, bei der der Halbwinkel (α) an der Spitze im Wesentlichen gleich 10 Grad ist.

5. Ringförmige Dichtung (7) nach einem der vorhergehenden Ansprüche, bei der der äußere Wulst (11) und der innere Wulst (14) Querschnitte aufweisen, die im Wesentlichen gleiche Flächen haben.

6. Ringförmige Dichtung (7) nach Anspruch 1, bei der der Wulst (11, 14) einen solchen Radius r hat, dass H/4<r<H/8, wobei H die Dicke der Dichtung in radialer Richtung der Dichtung darstellt.

7. Ringförmige Dichtung (7) nach Anspruch 6, bei der der Radius r im Wesentlichen gleich 1/6 der Dicke H ist.

8. Ringförmige Dichtung (7) nach Anspruch 1, bei der der Wulst (11, 14) einen solchen Radius r hat, dass 6r<L<10r, wobei L die Dicke der Dichtung (7) in axialer Richtung (X) der Dichtung (7) darstellt.

9. Ringförmige Dichtung (7) nach Anspruch 8, bei der der Radius r im Wesentlichen gleich 1/8 der Dicke L ist.

10. Ringförmige Dichtung (7) nach einem der vorhergehenden Ansprüche, bei der die Seitenflächen (8, 9) im Wesentlichen radial sind.

11. Ringförmige Dichtung (7) nach einem der vorhergehenden Ansprüche, die in Bezug auf eine radiale Mittelebene der Dichtung einen symmetrischen Querschnitt hat.

12. Verbindungsvorrichtung (1) zum Verbinden eines zylindrischen Rohres (5), umfassend eine ringförmige Dichtung (7) gemäß einem der vorhergehenden Ansprüche, wobei die Vorrichtung eine Bohrung (3) und einen Anschlag (6) umfasst, an dem eine der Seitenflächen (8, 9) der ringförmigen Dichtung (7) zur Anlage kommt.

13. Verbindungsvorrichtung (1) nach Anspruch 12, bei der das Rohr (5) ein Rohr aus Kunststoff ist.

14. Verbindungsvorrichtung (1) nach Anspruch 12, bei der die kegelstumpfförmige Fläche (15, 16) des Innenumfangs (13) so geformt ist, dass sie nach Einfügen des Rohres (5) eine radiale Umfangskompressionskraft auf das Rohr ausübt.

## Claims

1. Annular sealing gasket (7) for a fluid flow coupling device (1), the gasket (7) having side faces (8, 9), an outer circumference (10) defined by an outer bead (11), and an inner circumference (13) defined by an inner bead (14), **characterized in that** said inner bead (14) is connected to at least one of the side faces (8, 9) via a frustoconical surface (15, 16) that is not tangential to the inner bead (14), wherein said beads (11, 14) have a cross-section that is partially circular.

2. Annular sealing gasket (7) according to claim 1, wherein the outer bead (11) joins each of the side faces (8, 9) via a cylindrical surface (12) of generator line parallel to a central axis (X) of the gasket.

3. Annular sealing gasket (7) according to claim 1, wherein said frustoconical surface (15, 16) has a half-angle at the apex (α) lying in the range five degrees to twenty degrees, approximately.

4. Annular sealing gasket (7) according to claim 3, wherein the half-angle at the apex (α) is substantially equal to ten degrees.

5. Annular sealing gasket (7) according to any one of the preceding claims, wherein the outer and inner beads (11, 14) present cross-sections of substantially equal area.

6. Annular sealing gasket (7) according to claim 1, wherein said bead (11, 14) has a radius r such that H/4<r<H/8, where H represents the thickness of the gasket (7) in a radial direction of the gasket.

7. Annular sealing gasket (7) according to claim 6, wherein the radius r is substantially equal to 1/6 of the thickness H.

8. Annular sealing gasket (7) according to claim 1, wherein said bead (11, 14) has a radius r such that 6r<L<10r, where L represents the thickness of the gasket (7) in an axial direction (X) of the gasket (7).

9. Annular sealing gasket (7) according to claim 8, wherein the radius r is substantially equal to 1/8 of the thickness L.

10. Annular sealing gasket (7) according to any one of the preceding claims, wherein the side faces (8, 9) are substantially radial.

11. Annular sealing gasket (7) according to any one of the preceding claims, having a cross-section that is symmetrical relative to a radial midplane of the gasket.

12. Coupling device (1) for a cylindrical tube (5), including an annular sealing gasket (7) according to any one of the preceding claims, the device having a bore (3) and an abutment (6) against which one of the side faces (8, 9) of the annular sealing gasket (7) comes to bear.

13. Coupling device (1) according to claim 12,
wherein the tube (5) is a tube made of plastics material.

14. Coupling device (1) according to claim 12,
wherein the frustoconical surface (15, 16) of the inner circumference (13) is shaped to exert a radial peripheral compression force on the tube (5) after insertion of the tube (5).
